Europäisches Patentamt

European Patent Office

Office européen des brevets

(11) Numéro de publication : **0 414 587 B1**

(12) **FASCICULE DE BREVET EUROPEEN**

(45) Date de publication du fascicule du brevet :
**01.06.94 Bulletin 94/22**

(51) Int. Cl.$^5$ : **G01T 1/17, G01T 1/40**

(21) Numéro de dépôt : **90402124.3**

(22) Date de dépôt : **24.07.90**

(54) **Procédé et chaîne de spectrométrie gamma.**

(30) Priorité : **26.07.89 FR 8910074**

(43) Date de publication de la demande :
**27.02.91 Bulletin 91/09**

(45) Mention de la délivrance du brevet :
**01.06.94 Bulletin 94/22**

(84) Etats contractants désignés :
**AT BE CH DE ES GB GR IT LI LU NL SE**

(56) Documents cités :
**EP-A- 0 235 985
US-A- 3 634 688
NUCLEAR INSTRUMENTS & METHODS IN
PHYSICS RESEARCH, vol. A-238, no. 1, 15
juillet 1985, pages 153-159, Elsevier Science
Publishers B.V., Amsterdam, NL; T. TOJO:
"Nonlinear scintillation response of thin
NaI(Tl) crystals"**

(73) Titulaire : **ELECTRICITE DE FRANCE Service
National
2, rue Louis Murat
F-75008 Paris (FR)**

(72) Inventeur : **Boudan, Marc
1 rue des Platanes
F-92500 Rueil Malmaison (FR)**
Inventeur : **Pailhes, Alain
13, La Charlotte
F-13113 Lamanon (FR)**

(74) Mandataire : **Mongrédien, André et al
c/o BREVATOME
25, rue de Ponthieu
F-75008 Paris (FR)**

**Description**

La présente invention concerne un procédé et une chaîne de spectrométrie gamma.

L'invention s'applique notamment à la mesure de l'activité volumique de radioéléments présents dans un fluide circulant dans une canalisation. En particulier, l'invention s'applique à la détermination de l'activité volumique de radioéléments issus de l'enceinte d'un réacteur nucléaire à eau préssurisée, enceinte que l'on serait amenée à ouvrir en cas d'accident dans le réacteur nucléaire, cet accident résultant d'une coupure prolongée de l'ensemble des alimentations électriques de l'installation dont fait partie le réacteur et donc d'une perte prolongée des possibilités de refroidissement du coeur du réacteur.

Les radioéléments auxquels on s'intéresse dans un tel cas sont des radioéléments émetteurs de rayonnement gamma, tels que les isotopes de l'iode et du césium. Les activités volumiques de ces radioéléments peuvent être comprises dans une très large gamme de valeurs, gamme qui est déterminée par des jeux d'hypothèses dont les effets peuvent être dans un rapport de trois ordres de grandeur au moins.

Pour effectuer la mesure, on utilise une technique de spectrométrie gamma. Or les techniques de spectrométrie gamma connues utilisent des chaînes de spectrométrie dont la gamme de mesure est étroite du fait, en particulier, que se produit dans ces chaînes un phénomène de coïncidence d'impulsions pour les forts taux de comptage, ce phénomène ayant lieu notamment au niveau de l'amplificateur que comportent de telles chaînes.

Ainsi, ces techniques connues sont inadaptées à la mesure directe, sûre et continue des rejets de l'enceinte du réacteur en cas d'accident.

La présente invention vise un procédé de spectrométrie gamma et une chaîne de spectrométrie gamma qui ne présentent pas cet inconvénient et permettent d'effectuer des mesures directes, sûres et continues des rejets de l'enceinte du réacteur et, plus généralement, de radioéléments émetteurs gamma dont les activités volumiques peuvent être importantes.

La présente invention a pour objet un procédé de spectrométrie gamma, conformément à la revendication 1.

La série d'itérations effectuée s'appuie sur le phénomène suivant : chaque radioélément i émet des photons gamma sous la forme d'un spectre de raies d'énergies bien déterminées et les moyens de photoscintillation, soumis à ce spectre, fournissent un spectre continu $S_i$.

De plus, cette série d'itérations s'appuie (a) sur les rapports qui existent entre le spectre de raies et le spectre continu pour une activité donnée d'un radioélément, (b) sur le comportement physique des circuits de l'amplificateur et (c) sur le caractère de variable aléatoire de l'émission gamma des radioéléments.

Ces trois éléments (a), (b) et (c) permettent de définir respectivement : un spectre continu $S_i$ reçu par l'entrée de l'amplificateur pour une activité volumique donnée d'un radioélément donné i, une largeur d'impulsion T appelée "temps élémentaire d'échantillonnage" et des ensembles d'impulsions uniques, doubles, triples, quadruples ... relativement à T.

L'ensemble des impulsions doubles (respectivement triples, quadruples, ...) relativement à T, est l'ensemble des impulsions qui se présentent groupées par deux (respectivement trois, quatre ...) à l'entrée de l'amplificateur pendant un temps au plus égal à T.

On peut arrêter les itérations conduisant aux activités volumiques lorsque l'écart relatif entre chaque nombre $B_i$ de la dernière itération effectuée et chaque nombre $B_i$ de l'avant dernière itération effectuée est inférieur à une valeur déterminée, par exemple 5%, ceci pour des valeurs de i choisies, les activités volumiques à déterminer étant alors prises égales aux nombres $B_i$, $1 \leq i \leq n$, de la dernière itération.

Dans le deuxième phase du procédé objet de l'invention, à partir du spectre pur S,

. d'une part, en regroupant les impulsions de ce spectre pur suivant les n intervalles d'énergie, on détermine la série de n nombres d'impulsions $a_i$, $1 \leq i \leq n$, respectivement associés à ces n intervalles d'énergie,

. d'autre part, en tenant compte du caractère aléatoire de la radioactivité et en appliquant à ce spectre la loi de probabilité mémorisée, on détermine des spectres d'ordre k, k prenant ici des valeurs entières à partir de 1, ces spectres étant homothétiques entre eux et homothétiques du spectre pur S, le spectre d'ordre k étant le spectre des impulsions qui arrivent à l'entrée de l'amplificateur dans un intervalle de temps tel qu'elles seront regroupées par k dans l'amplificateur, la valeur maximum de k étant avantageusement 3,

. par traitement mathématique de chaque spectre d'ordre k, on détermine les spectres de sortie de l'amplificateur, d'ordre k,

. par addition de ces spectres de sortie, incrément d'énergie par incrément d'énergie, on calcule le spectre global de sortie de l'amplificateur pour le spectre pur S à l'entrée de cet amplificateur, et

. on regroupe ce spectre global en les n intervalles d'énergie pour obtenir la série de n autres nombres

d'impulsions $b_i$, $1 \leq i \leq n$, respectivement associés aux n intervalles d'énergie et homologues des nombres $a_i$.

De préférence, les nombres $B_i$, $1 \leq i \leq n$, sont déterminés dans la première phase du procédé objet de l'invention par une série d'itérations utilisant une méthode de type GAUSS SEIDEL et les itérations de la première phase, conduisant à ces nombres $B_i$, sont arrêtées lorsqu'il y a convergence, c'est-à-dire, par exemple, lorsque, pour tout i, $1 \leq i \leq n$, l'écart relatif entre le nombre $B_i$ obtenu à la dernière itération et le nombre $B_i$ obtenu à l'avant dernière itération est inférieure à une valeur déterminée, par exemple 1%.

La présente invention a également pour objet une chaîne de spectrométrie gamma, conformément à la revendication 8.

De préférence, le premier ensemble comporte en outre des moyens de stabilisation de la réponse en énergie du rayonnement gamma en fonction de la température du scintillateur, afin de permettre un fonctionnement correct de la chaîne à des températures variables.

De préférence également, la chaîne de spectrométrie objet de l'invention comprend en outre un deuxième ensemble qui est identique au premier mais dont le photoscintillateur n'est pas directement exposé au rayonnement gamma des radioéléments à mesurer, les moyens électroniques de traitement recevant les informations des sélecteurs des deux ensembles et soustrayant, fenêtre par fenêtre, les informations du sélecteur du deuxième ensemble des informations du sélecteur du premier ensemble pour obtenir les nombres $A1_i$, $1 \leq i \leq n$, avant d'effectuer ladite simulation, afin de pouvoir compenser le bruit de fond gamma.

Enfin, chaque scintillateur est avantageusement en NaI(Tl) afin de pouvoir fonctionner correctement à des températures variables.

La présente invention sera mieux comprise à la lecture de la description suivante d'exemples de réalisation donnés à titre purement indicatif et nullement limitatif en référence aux dessins annexés sur lesquels :

- la figure 1 est une vue schématique d'une enceinte de réacteur nucléaire, munie d'un filtre à sable de filtration-décompression,
- la figure 2 est une vue schématique d'un blindage qui est disposé en aval du filtre à sable et à l'intérieur duquel sont disposées deux sondes de mesure faisant partie d'une chaîne de spectrométrie pour la mise en oeuvre de la présente invention, et
- la figure 3 est une vue schématique de cette chaîne de spectrométrie.

La présente invention s'applique en particulier à la mesure de la radio-activité du rejet d'un filtre à sable dont peut être munie l'enceinte d'un réacteur à eau pressurisée (par exemple du genre de ceux qui sont installés en France), réacteur dont on est amené à ouvrir l'enceinte à la suite d'un arrêt de longue durée des systèmes de refroidissement du réacteur.

La mesure objet de l'invention vise à compléter les informations, résultant d'études théoriques et expérimentales, dont on dispose dans le cas où une telle procédure (ouverture de l'enceinte) serait mise en oeuvre. Ces études théoriques et expérimentales permettent de quantifier a priori, mais avec certaines incertitudes, l'importance du rejet et ses conséquences sur l'environnement. Ces incertitudes sont liées, d'une part, aux valeurs relatives à l'activité volumique de différents isotopes de l'iode et du césium qui sont présents dans l'atmosphère de l'enceinte et, d'autre part, à l'efficacité du filtre à sable. La valeur théorique du rejet en gaz rares ayant peu d'incertitude, on se préoccupe essentiellement de la détection des isotopes de l'iode et des aérosols de divers isotopes de césium, en éliminant dans toute la mesure du possible l'influence, à l'endroit de la détection, des gaz rares et du bruit de fond gamma qui est dû à l'accident et à l'accumulation de radioéléments dans le filtre à sable.

Il est à noter que les gaz rares que comporte le rejet sont présents en grande quantité dans celui-ci et donnent lieu à un signal qui perturbe la mesure des radio-isotopes de l'iode et du césium.

De plus, compte tenu de l'ensemble des circonstances conduisant à un accident d'une telle gravité, on ne peut utiliser une méthode de mesure nécessitant une stabilisation très fine de la température. En conséquence, la chaîne de spectrométrie gamma est conçue pour pouvoir fonctionner convenablement à des températures variables.

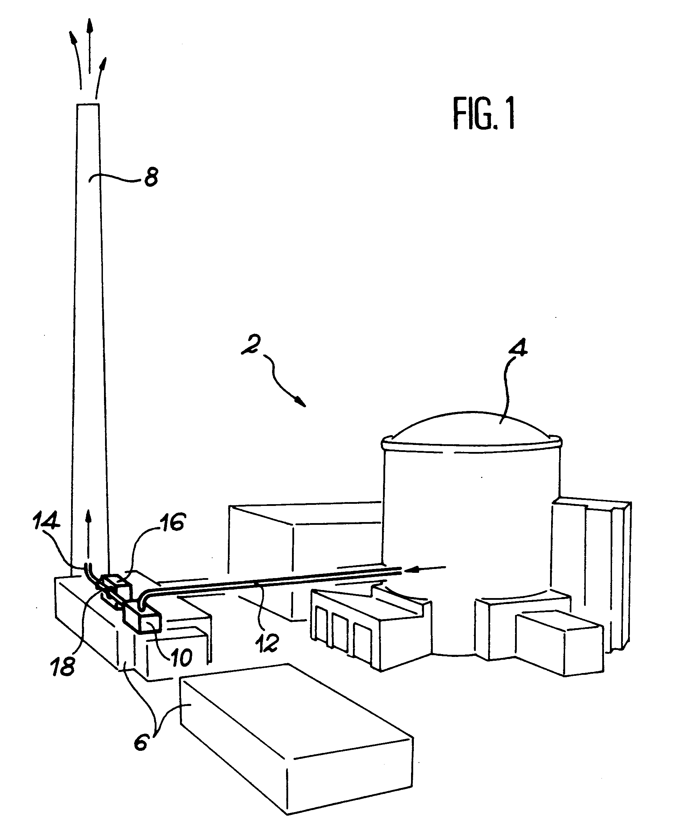

Sur la figure 1, on a représenté schématiquement une installation nucléaire 2 à réacteur à eau pressurisée comportant une enceinte 4 et divers bâtiments 6 ainsi qu'une cheminée 8 permettant d'effectuer divers rejets gazeux lors du fonctionnement normal du réacteur. L'enceinte est munie d'un dispositif de filtration-décompression de l'atmosphère de l'enceinte, dispositif qui est utilisé dans le cas de l'accident dont il a été question plus haut. Ce dispositif comporte un filtre à sable 10 qui est situé sur le toit de l'un des bâtiments 6 et auquel aboutit une canalisation 12 permettant, par l'ouverture de vannes non représentées, la décompression de l'enceinte. Dans ce cas, l'atmosphère de l'enceinte est évacuée vers le filtre à sable 10 qui est prévu pour retenir l'essentiel des radioéléments sous forme d'aérosols contaminant l'atmosphère de l'enceinte. Une canalisation 14 permet d'envoyer le rejet filtré dans la cheminée 8.

La chaîne de spectrométrie utilisée comporte deux sondes de mesure, à scintillateurs à iodure de sodium, à calibration automatique en énergie. Ces sondes sont par exemple du genre de celles que l'on utilise dans le cadre de la mesure de l'azote 16 pour la surveillance des fuites primaire-secondaire des générateurs de vapeur des réacteurs à eau pressurisée installés en France.

Ces sondes, pour une température d'ambiance comprise entre +10°C et +60°C, donnent une réponse en énergie qui est stabilisée à mieux que 20 keV entre 200 keV et 2,5 MeV. Ces sondes permettent une spectrométrie raisonnablement adaptée aux besoins de la mesure des activités lors de l'accident considéré, le nombre de radio-éléments à identifier et à mesurer étant limité.

Les sondes sont logées dans un blindage 16 qui est situé à proximité du filtre à sable 10, en regard de la canalisation 14. Le blindage 16, réalisé en plomb, est prévu pour atténuer fortement les rayonnements qui proviendraient notamment du filtre à sable dans le cas de la décompression de l'enceinte et ce, pour ne pas perturber la mesure.

On voit sur la figure 1 que la canalisation 14 comporte un tronçon de tuyauterie 18 en regard du blindage 16. Ce tronçon de tuyauterie 18, qui est raccordé au reste de la canalisation 14 par l'intermédiaire de brides, a un diamètre intérieur aussi proche que possible de celui du reste de la tuyauterie 14. Ce tronçon est par exemple en acier inoxydable et sa paroi interne est polie.

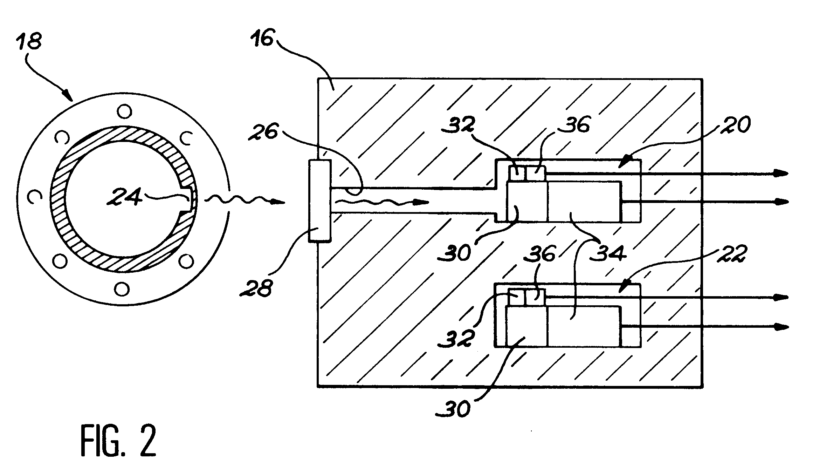

L'une des sondes, qui porte la référence 20 sur la figure 2, sert à la mesure proprement dite tandis que l'autre sonde, qui porte la référence 22, est prévue pour la compensation du bruit de fond gamma.

La sonde 20 est logée dans le blindage 16, en regard du tronçon de tuyauterie 18. Un affaiblissement 24 de l'épaisseur de la paroi de ce tronçon de tuyauterie 18 est prévu en regard de la sonde 20, d'une part pour maîtriser le coefficient de transmission des rayonnements gamma émis par les radioéléments contenus dans le fluide qui circule dans la canalisation 14 et d'autre part, pour maximaliser le rapport du coefficient de transmission des photons gamma de l'iode 131 (énergie de pic photo-électrique 0,36 MeV) au coefficient de transmission des photons gamma des gaz rares (énergies de pic photo-électrique 0,08 MeV et 0,24 MeV).

Le blindage 16 comporte un collimateur 26 entre ledit affaiblissement de paroi 24 et la sonde de mesure 20. Le diamètre du collimateur 26 détermine la sensibilité de la sonde de mesure, celle-ci étant exprimée en nombre de coups vus par le scintillateur de la sonde par rapport à l'activité volumique du fluide circulant dans le tronçon de canalisation 18. Ce diamètre est tel que, pour l'activité volumique maximale dans le tronçon 18, la sonde de mesure 20 ne subisse pas de dommage.

L'épaisseur du blindage participe à la détermination de la valeur basse de la gamme de mesure de la chaîne de spectrométrie. En effet, comme on le verra par la suite, on est amené à soustraire le signal de bruit de fond gamma du signal issu de la sonde de mesure 20, pour chacune des fenêtres en énergie définies à l'avance pour la chaîne de spectrométrie. Le résultat de la soustraction, fenêtre par fenêtre, du bruit de fond mesuré par la sonde de compensation 22 est une variable aléatoire que l'on peut assimiler à une variable de GAUSS. La précision du résultat de la soustraction est donc lié directement au nombre de coups N1 compté dans la fenêtre relative à la mesure et au nombre de coups N2 compté dans la fenêtre relative à la compensation. L'écart-type du résultat de la différence N1 - N2 est égal à la racine carrée de (N1+N2) et la précision relative est égale à la racine carrée de (N1+N2) divisée par (N1-N2).

Le nombre N2 doit donc être très petit devant N1 de façon que l'écart-type soit très petit devant N1-N2, valeur que l'on cherche à mesurer et qui est la grandeur primaire du procédé de déconvolution de spectre qui est mis en oeuvre dans la chaîne de spectrométrie, conformément à l'invention.

De plus, il faut noter que, pendant l'opération de décompression de l'enceinte, l'activité volumique à mesurer évolue en sens inverse du bruit de fond qui, lui, est provoqué par l'accumulation des radioéléments dans l'environnement de la zone où la mesure est effectuée.

On observe en outre sur la figure 2 que le blindage 16 est muni d'un écran 28 par exemple en étain, qui est placé entre l'entrée du collimateur 26 et l'affaiblissement de paroi 24 et qui contribue à maximaliser le rapport entre le coefficient de transmission des photons gamma de l'iode 131 et le coefficient de transmission des photons gamma des gaz rares (qui sont beaucoup plus abondants que l'iode 131 dans le rejet), en atténuant fortement le débit de dose dû aux gaz rares sans trop affaiblir le rayonnement gamma dû aux radio-isotopes de l'iode, en particulier l'iode 131.

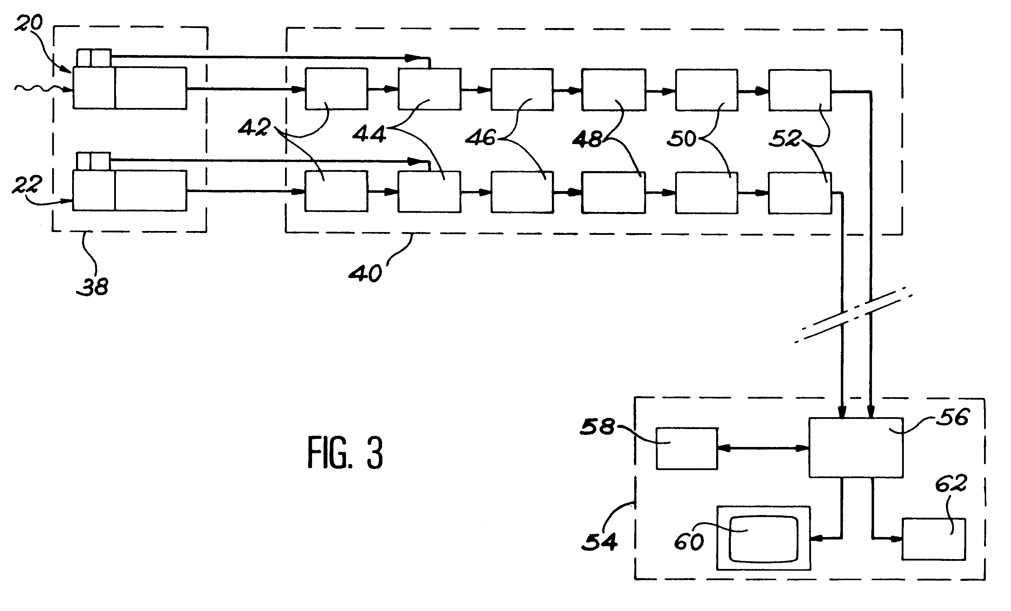

Comme on le voit sur les figures 2 et 3, chacune des sondes 20 et 22 comprend un scintillateur 30 en iodure de sodium, marqué par une source 32 émettrice de rayonnement alpha (par exemple une source en Am 241), un photomultiplicateur 34 qui reçoit la lumière émise par le scintillateur lorsque celui-ci reçoit un rayonnement gamma, et une sonde de température 36.

Comme on le voit sur la figure 3, la chaîne de spectrométrie utilisée dans la présente invention comprend, en plus de l'ensemble 38 constitué par les sondes 20 et 22, un ensemble électronique de prétraitement 40, qui est placé dans un bâtiment attenant au réacteur, à distance du blindage 16. Cet ensemble 40 comprend deux sous-ensembles identiques respectivement associés aux sondes. Chaque sous-ensemble comprend successivement un pré-amplificateur 42 qui amplifie le signal issu du photo-multiplicateur correspondant, un dispositif de stabilisation de réponse en énergie 44 qui reçoit les signaux respectivement fournis par le pré-amplificateur 42 et par la sonde de température 32 correspondante, un amplificateur 46, un sélecteur de hauteur d'impulsions 48, par exemple à 8 voies ou fenêtres d'énergie, un ensemble de registres de découplage temporel 50 et des moyens de liaison série-asynchone 52.

Chaque dispositif 44 est prévu pour stabiliser la réponse en énergie des rayonnements gamma en fonction de la température du scintillateur correspondant. En fonction de cette température, un micro-processeur, que comporte le dispositif 44, calcule et commande le gain de l'amplificateur 46 en mesurant la hauteur des impulsions dues à la source alpha associée au scintillateur. Dans la fourchette de températures (+10°C, +60°C), la valeur centrale de la hauteur des impulsions dues à la source alpha correspond à une absorption photo-électrique d'un rayonnement gamma d'énergie de l'ordre de 3 MeV.

L'ensemble électronique de prétraitement 40 comprend en outre diverses alimentations électriques (non représentées) de haute et basse tensions.

On voit sur la figure 3 que le dispositif 44 agit sur l'amplificateur 46 en fonction des signaux qu'il reçoit de la sonde de température 32 et du préamplificateur 42 correspondants. Chaque sélecteur 48 fournit en fonction des signaux amplifiés qu'il reçoit de l'amplificateur 46 correspondant, un spectre qui est défini par un nombre de coups par seconde pour chacune des fenêtres en énergie que l'on a défini dans le sélecteur. On dispose ainsi d'une série de nombres (8 s'il y a 8 fenêtres en énergie).

La chaîne de spectrométrie fournit ainsi des informations qui sont envoyées à un ensemble électronique de traitement 54. Cette ensemble 54 peut être situé dans la salle de commande du réacteur. En variante, en utilisant des modems et des lignes téléphoniques, cet ensemble 54 peut être installé dans un autre bâtiment du site sur lequel se trouve le réacteur.

L'ensemble 54 comprend un micro-ordinateur 56 qui reçoit en entrée les informations (nombres) fournies par les sélecteurs 48, par l'intermédiaire des registres de découplage temporel 50 et des moyens de liaison série-asynchrone 52. Pour chaque sélecteur 48, un registre est associé à une fenêtre d'énergie.

Le micro-ordinateur 56 est pourvu de divers périphériques tels qu'une unité de disquettes 58, un moniteur vidéo 60 et une imprimante 62. Le micro-ordinateur interroge périodiquement les registres de chaque ensemble de registres 50 et reçoit ainsi une série de 8 informations, du sélecteur 48 associé à la sonde de mesure 20, et une série de 8 informations, du sélecteur associé à la sonde de compensation de bruit de fond 22. La première opération effectuée par le micro-ordinateur 56 consiste à soustraire, fenêtre par fenêtre, le signal de bruit de fond correspondant à la sonde 22 du signal de mesure correspondant à la sonde 20.

La chaîne de spectrométrie représentée sur la figure 3 permet de faire des mesures en continu, le micro-ordinateur 56 permettant de déterminer, à un moment donné, les activités volumiques respectives de radio-isotopes déterminés qui ont circulé un certain temps auparavant (qui dépend de la vitesse de calcul du micro-ordinateur et qui peut être de l'ordre de 1/4 d'heure par exemple) dans la canalisation 14.

Chaque amplificateur 46 a pour fonction d'amplifier suffisamment les signaux qui lui sont fournis par le pré-amplificateur 42 associé, par l'intermédiaire du dispositif 44 correspondant, pour que ces signaux puissent être traités par le sélecteur associé 48. De plus, chaque amplificateur 46 est prévu pour fournir en sortie des impulsions sensiblement en forme de triangle isocèle dont la base est constante et a une valeur T, par exemple de l'ordre de 1 micro-seconde, et dont la surface est proportionnelle à l'énergie correspondant aux impulsions d'entrée, ce qui conduit à des impulsions de sortie dont la hauteur est proportionnelle à l'énergie laissée par les photons gamma dans le scintillateur correspondant. Un tel amplificateur optimisé est réalisable par un homme du métier. On précise que les deux amplificateurs 46 sont réglés à la même largeur d'impulsion à la base T et au même gain effectif global.

Dans le cadre de la mesure objet de l'invention, le spectre des radioéléments rejetés B peut être considéré comme connu du point de vue qualitatif, les radioéléments ayant été identifiés.

Le but de la mesure effectuée avec la chaîne de spectrométrie représentée sur la figure 3 est de quantifier le spectre B.

Comme on l'a déjà indiqué, la première opération effectuée par le micro-ordinateur 56 consiste à soustraire n nombres, représentatifs du bruit de fond, respectivement de n autres nombres correspondant au signal de mesure. Ces nombres sont exprimés en coups par seconde (on parlera également d'impulsions dans la suite), n étant un nombre entier positif égal à 8 dans l'exemple donné plus haut.

On peut considérer en première approximation que le phénomène physique d'émission de rayonnement gamma, le temps de luminescence des scintillateurs, les temps de réponse respectifs des photomultiplicateurs, des pré-amplificateurs et des sélecteurs de hauteur d'impulsion sont extrêmement faibles devant le temps de réponse des amplificateurs, qui est relativement long. Ce dernier temps de réponse, multiplié par la fréquence d'apparition des scintillations, provoque le temps mort des amplificateurs et donc un phénomène de coïncidence dans ces amplificateurs : deux impulsions parfaitement distinctes en sortie d'un photo-multiplicateur peuvent être amplifiées simultanément et donc "vues" par le sélecteur de hauteur d'impulsion comme ne faisant qu'une impulsion de forme plus ou moins complexe.

Ce phénomène de coïncidence à pour conséquence de diminuer la statistique des impulsions de faible énergie et d'augmenter la statistique des impulsions de forte énergie.

Par la mesure, le micro-ordinateur 56 dispose, une fois le bruit de fond déduit, de n nombres exprimés en coups par seconde, notés $A1_1$, $A1_2$, ..., $A1_n$ et appelés "série A1".

Conformément à l'invention, le micro-ordinateur 56 exécute un programme de déconvolution destiné à trouver une série de n radioéléments dont les activités volumiques, par exemple exprimées en $Ci/m^3$, constituent une série de n nombres, appelée "spectre $B^x$" qui peut être considéré comme représentatif du spectre B des radioéléments présents dans la tuyauterie 14.

Entre la série A1 et le spectre S, il existe donc une forte déformation, qui est variable en fonction de la fréquence des impulsions dans le scintillateur de chaque sonde et de la forme du spectre S et le programme de déconvolution doit tenir compte de cette déformation.

On va maintenant expliquer le principe du calcul de déconvolution : ce calcul est fondé sur une série d'itérations, chaque itération comportant deux phases, et le critère d'arrêt des itérations est l'évolution de la convergence, exprimée en pourcentage, entre deux itérations successives.

A titre purement indicatif mais nullement limitatif, on considère n=8 fenêtres, numérotées de 1 à 8 et correspondant respectivement aux intervalles d'énergie suivants : 2,3-2,5 MeV, 1,9-2,3 MeV, 1,05-1,9 MeV, 0,85-1,05 MeV, 0,7-0,85 MeV, 0,44-0,7 MeV, 0,3-0,44 MeV et 0,2-0,3 MeV.

Par ailleurs, dans cet exemple, les fenêtres 1 à 8 sont respectivement associées aux radioéléments suivants : Kr88, Cs138, I135, I132, Cs134, Cs137, I131 et Xe135.

Chaque fenêtre est associée à un pic photoélectrique monochromatique dit "pic d'identification", correspondant à un radioélément et, en plus, à un ou plusieurs pics photoélectriques secondaires ainsi qu'à l'effet COMPTON, qui correspondent à d'autres radioéléments : comme on le verra mieux par la suite, on est ainsi amené à déduire, pour chaque fenêtre, un nombre de coups par seconde tenant compte de pics photoélectriques secondaires et de l'effet COMPTON pour obtenir un nombre de coups corrigés qui correspond au pic photoélectrique d'identification du radioélément correspondant à cette fenêtre (ces corrections étant faites après soustraction du bruit de fond comme on l'a déjà indiqué).

Le calcul de déconvolution prend comme point de départ la série A1.

La première phase de la première itération est elle-même une suite d'itérations permettant, à partir de la série A1, de trouver des valeurs approchées des activités volumiques :

En premier lieu, on considère que chaque nombre de la série A1 est uniquement dû au pic photoélectrique monochromatique du radioélément correspondant, d'où une série $B1^1$ de nombres $B1_i^1$, i variant entre 1 et n, correspondant à un spectre surestimé puisque l'on ne prend pas en compte l'effet COMPTON ni les pics photoélectriques secondaires.

En second lieu, à partir de cette série $B1^1$ et de la fenêtre 1, on soustrait, dans les autres fenêtres, des nombres de coups par seconde correspondant à l'effet COMPTON dû au radioélément associé à la fenêtre 1, d'où une série $B2^1$ de nombres $B2_i^1$, i variant entre 1 et n, correspondant à un spectre sous-estimé puisqu'on est parti de nombres $B1_i^1$ trop grands.

Et ainsi de suite, on effectue de même d'autres itérations conduisant à des séries $B3^1$, $B4^1$, ....

On a trouvé que la convergence est meilleure que 1% entre les séries $B4^1$ et $B5^1$ et ces itérations peuvent donc être arrêtées à la série $B5^1$. Plus précisément, on trouve que la valeur absolue de $(B5_i^1 - B4_i^1)/B4_i^1$, pour tout i compris entre 1 et 8, est inférieure à 1%.

La série d'itérations conduisant à la série $B5^1$ est en fait l'application directe de la méthode de GAUSS-SEIDEL.

On effectue ensuite la deuxième phase de la première itération :

On a préalablement mémorisé (voir plus loin) n spectres normés pour $1Ci/m^3$ (spectres normés de même nature que le spectre S) correspondant respectivement aux n radioéléments choisis. Chaque spectre normé correspondant à un intervalle d'énergie qui est subdivisé en canaux d'énergie, chaque canal d'énergie étant associé à un nombre de coups par seconde. L'intervalle d'énergie en question va de 0 MeV à 2,5 MeV dans l'exemple donné et chaque canal d'énergie a, par exemple, une amplitude de 10 keV.

Dans la deuxième phase de la première itération, pour chaque spectre normé, on multiplie le nombre de coups par seconde de chaque canal par le nombre $B5_i^1$ correspondant, on ajoute, canal par canal, les spectres résultant de ces multiplications, et il en résulte un spectre appelé "spectre pur", noté $S^1$.

D'une part, on regroupe les canaux de ce spectre pur en n intervalles d'énergie respectivement égaux aux fenêtres définies plus haut d'où n nombres $a1_i$ (en coups par seconde) formant une série a1.

D'autre part, on calcule une série b1 de n nombres $b1_i$, exprimée en coups par seconde, i variant entre 1 et n, ce calcul étant effectué à partir du spectre pur $S^1$ en tenant compte des coïncidences qui ont lieu du fait des amplificateurs et, pour ce faire, en utilisant une loi de probabilité donnant la probabilité d'avoir un nombre déterminé d'impulsions à l'entrée des amplificateurs pendant un intervalle de temps inférieur à T. Cette loi de probabilité est approximée par la loi de POISSON.

On calcule ensuite, pour tout i variant entre 1 et n, la différence $a1_i - b1_i$, d'où une estimation de la perturbation due aux coïncidences.

On calcule ensuite une série de nombre $A2_i$, i variant entre 1 et n, avec :

$$A2_i = A1_i - (b1_i - a1_i).$$

La première itération est ainsi achevée.

La deuxième itération est ensuite effectuée : à partir des nombres $A2_i$, on recommence les calculs pour obtenir (première phase de la deuxième itération) des nombres $B5_i^2$ (homologues des nombres $B5_i^1$) puis dans la deuxième phase de la deuxième itération, le spectre pur $S^2$ et les nombres $b2_i$ et $A3_i$, avec :

$$A3_i = A1_i - (a2_i - b2_i).$$

Si nécessaire, on effectue d'autres itérations et, en notant $B5^{x-1}$ le spectre correspondant aux activités volumiques approchées obtenues à l'avant dernière itération (de rang x-1) et $B5^x$ le spectre correspondant aux activités volumiques approchées obtenues à la dernière itération (de rang x), on arrête les itérations lorsque la valeur absolue de la différence $B5_i^x - B5_i^{x-1}$, divisé par $B5_i^{x-1}$, est inférieure à 5% et ce pour plusieurs valeurs de i déterminées, par exemple pour les quatre indices i correspondant respectivement aux radioéléments I131, I132, I135 et Cs134.

On considère alors le spectre $B5^x$ comme représentatif du spectre B dans la tuyauterie 14 et les nombres $B5_i^x$, i variant entre 1 et n, sont imprimés.

On notera que la série a1 est homogène avec la série qui pourrait être obtenue par comptage s'il n'y avait pas de phénomène de coïncidence dans les amplificateurs et si le spectre dans la tuyauterie 14 était $B5^1$.

On notera également que la série b1 est homogène avec la série qui pourrait être obtenue par comptage si le spectre dans la tuyauterie 14 était $B5^1$ en tenant compte des phénomènes de coïncidence.

On notera également que les nombres $a1_i - b1_i$, i variant entre 1 et n, sont homogènes avec les perturbations dues aux coïncidences et vues par les sélecteurs de hauteur d'impulsion si le spectre dans la tuyauterie 14 était $B5^1$.

On donne ci-après des précisions sur la première phase des itérations, en prenant l'exemple de la première itération et en supposant n=8.

Dans la première phase de cette première itération, on calcule les nombres

$$B1_i^1 = A1_i/Ci, \quad 1 \leq i \leq n$$

où Ci, $1 \leq i \leq 8$, est le coefficient d'étalonnage du corps de la fenêtre i, c'est-à-dire le nombre total de coups par seconde correspondant à cette fenêtre i pour une activité volumique de 1Ci/m³ (première itération de la première phase).

Ensuite (deuxième itération de la première phase), on calcule les nombres $B2_i^1$, $1 \leq i \leq 8$ :

$$B2_1^1 = B1_1^1$$

$$B2_2^1 = (A1_2 - (NC_2^1.B1_1^1))/C2$$

$$B2_3^1 = (A1_3 - (NC_3^1.B1_1^1) - (NC_3^2.B1_2^1))/C3$$

$$...$$

$$B2_8^1 = (A1_8 - (NC_8^1.B1_1^1) - (NC_8^2.B1_2^1) - ... - (NC_8^7.B1_7^1))/C8$$

en notant $NC_i^j$ le nombre total de coups par seconde correspondant à la fenêtre i pour le spectre normé de l'élément j.

La troisième itération de la première phase est la suivante :

$$B3_1^1 = B2_1^1$$

$$B3_2^1 = B2_2^1$$

$$B3_3^1 = (A1_3 - (NC_3^1.B2_1^1) - (NC_3^2.B2_2^1))/C3$$

$$...$$

$$B3_8^1 = (A1_8 - (NC_8^1.B2_1^1) - ... - (NC_8^7.B2_7^1))/C8$$

Les nombres $B4_i^1$, $1 \leq i \leq 8$, obtenus au cours de la quatrième itération de la première phase sont les suivants :

$$B4_i^1 = B3_i^1 \text{ pour } i = 1,2,3$$

$$B4_4^1 = (A1_4 - (NC_4^1.B3_1^1) - ... - (NC_4^3.B3_3^1))/C4$$

et ainsi de suite jusqu'à $B4_8^1$ après quoi, on effectue la cinquième itération de la première phase ...

On va maintenant donner plus de précision sur la manière de quantifier les phénomènes de coïncidence entre impulsions qui se produisent dans les amplificateurs, en cas de fort taux de comptage.

Grâce à des relevés expérimentaux et à l'aide de source émettrices de rayonnement gamma monoénergétique, on dispose de spectres continus $S_i$, qui tiennent compte de l'effet COMPTON et des pics photoélectriques. Par interpolation et transformation linéaire, on peut construire avec précision les spectres obtenus pour n'importe quelle émission gamma. On peut ainsi obtenir les spectres relatifs aux radioéléments déterminés, correspondant respectivement aux n fenêtres, n étant égal à 8 dans l'exemple donné.

Pour les relevés expérimentaux, on utilise des sources dont l'activité est connue avec une bonne précision, et qui donnent lieu à un très faible taux de comptage afin de pouvoir considérer comme nulle la probabilité de coïncidence. De plus, on utilise la chaîne de spectrométrie de la figure 3 pour l'établissement de ces spectres, en remplaçant le sélecteur de hauteur d'impulsion par un analyseur d'impulsions et en plaçant le collimateur de la figure 2 (muni du filtre 28) devant la sonde de mesure, en veillant à un positionnement correct des sources, les unes après les autres, devant ce collimateur.

Les n spectres nécessaires à la mesure, obtenus comme on vient de l'expliquer, sont de plus normalisés à 1Ci/m³ et mémorisés par incréments de 10 keV de largeur, entre 0 et 2,5 MeV comme on l'a vu.

A partir d'un spectre $B^i$ dans la tuyauterie, exprimé en Ci/m³, supposé connu, on va construire, par simulation mathématique, le spectre de sortie de l'amplificateur. A partir des spectres normés et des valeurs des activités volumiques individuelles des radioéléments contenus dans le spectre $B^i$, on construit, par addition, un spectre global, appelé "spectre pur" $S_i$, qui est une grandeur physique existant avant la déformation apportée par les coïncidences dans l'amplificateur, mais qui n'est pas accessible à la mesure puisque les énergies des impulsions en sortie d'un photomultiplicateur sont trop faibles pour actionner un sélecteur de hauteur d'impulsion. Ce spectre pur $S_i$ est composé, dans l'exemple ci-dessus, de 250 nombres représentant des impulsions de hauteurs i, j, k...

On va maintenant faire l'analyse des phénomènes de coïncidence se produisant dans l'amplificateur en cas de fort taux de comptage :

On tient compte de la nature aléatoire du phénomène de radio-activité et l'on considère, en première approximation, que la probabilité $P_m(k)$ pour avoir, à l'entrée d'un amplificateur 46, dans un intervalle de temps inférieur à T, un nombre k d'impulsions est donnée par la formule suivante :

$$P_m(k) = e^{-m} \cdot m^k / k\,!$$

On utilise donc, en première approximation, la loi de POISSON. Le nombre k prend des valeurs entières positives ou nulles. Le nombre m représente le nombre moyen d'impulsions relativement au temps d'acquisition T (largeur à la base d'une impulsion en sortie de l'amplificateur). Ainsi m est égal à N.T, N représentant la somme des nombres de coups par seconde de tous les canaux d'énergie du spectre pur $S_i$.

Ainsi, chacun des nombres $N_i$ respectivement contenu dans les registres $R_i$ du spectre pur correspond à la réalisation physique de la probabilité d'obtenir, ou de mesurer, l'impulsion de hauteur i par événement unique (k=1) à l'entrée de l'amplificateur.

La loi de POISSON donne la probabilité d'obtenir, par coïncidence, une autre impulsion de hauteur quelconque (i, j, k...), prise dans le spectre $S_i$, dans le temps T.

Par ailleurs, si l'événement "deux impulsions i, j" se produit, le temps d'occupation de l'amplificateur est compris entre T (les deux impulsions sont strictement superposées) et 2T (les deux impulsions sont presque disjointes) et seule l'impulsion de plus grande hauteur est vue par le sélecteur de hauteur d'impulsion. Il convient donc de déduire, pour simuler ce qui se passe en aval de l'amplificateur, l'impulsion de plus petite hauteur, soit i si i est inférieur à j. De plus, en première approximation, on considère que, pour un grand nombre d'événements "i+j", le temps moyen d'occupation de l'amplificateur est égal à 1,5 T.

Pour que trois impulsions de hauteur respective i, j et k soit vues comme une seule impulsion par l'amplificateur, il faut que l'événement "i+j" ait eu lieu et que la troisième impulsion arrive dans l'intervalle de temps 1,5 T. La probabilité d'apparition de trois événements simultanés dans un temps T est donnée par la loi de POISSON de moyenne m3=1,5 N.T.

Ainsi, la probabilité d'avoir trois impulsions simultanément dans l'amplificateur est égale à $P'(3)$ tel que :

$$P'(3) = (P_m(3)) + (P_m(2).P_{m3}(3))$$

Le même raisonnement peut être poursuivi pour 4, 5 ... impulsions simultanées mais les probabilités deviennent très faibles et sont ici négligées, k étant ainsi inférieur ou égal à 3.

Lorsque l'événement "trois impulsions de hauteurs respectives i, j, k, avec i inférieur à j lui-même inférieur à k" se réalise, seule l'impulsion la plus grande (k) est vue en sortie de l'amplificateur.

Lorsque deux ou trois telles impulsions arrivent dans un certain temps t, elles peuvent être placées dans le temps de telle façon que l'impulsion en sortie de l'amplificateur ait une hauteur supérieure à la hauteur de la plus grande des impulsions. En première approximation, l'amplificateur fabriquant des impulsions en forme de triangle isocèle à base constante T, la condition d'arrivée des impulsions dans le temps t est que l'arrivée du début de la deuxième impulsion (et de la troisième) ait lieu dans la première demi-base du triangle isocèle de la première impulsion, soit t=T/2.

Dans ce cas, pour deux impulsions i et j, il faut déduire l'impulsion j pour simuler la sortie de l'amplificateur (i ayant déjà été déduit, comme on l'a vu plus haut) et placer l'impulsion résultante "au-dessus" de j (du point de vue de la hauteur des impulsions). En premier approximation, on effectue dans ce cas une équirépartition dans l'intervalle d'énergie allant de (j+1) à (i+j).

Dans le cas de trois impulsions i, j et k (i inférieur à j lui-même inférieur à k), il faut déduire l'impulsion k et répartir l'impulsion résultante dans l'intervalle allant de (k+1) à (k+j+i). On utilise encore dans ce cas une équirépartition dans cet intervalle.

On va maintenant expliquer la détermination du spectre de sortie résultant de la transformation du spectre pur $S_i$ par l'amplificateur :

Pour ce faire, on utilise, en première approximation, la loi de POISSON comme on l'a déjà indiqué. On peut ainsi connaître le nombre k d'impulsions se présentant à l'entrée de l'amplificateur pendant un temps d'échantillonnage choisi, ainsi que le nombre moyen m de ces impulsions. En prenant comme temps d'échantillonnage le temps T (largeur de base de l'impulsion en sortie de l'amplificateur) on obtient une valeur moyenne m et en prenant comme temps d'échantillonnage la moitié de la largeur de l'impulsion en sortie de l'amplificateur, on obtient une valeur moyenne m′ égale à m/2.

On considère le spectre pur comme une suite de nombres $X_i$, i variant entre 1 et 250 dans l'exemple donné. On décompose le spectre pur en plusieurs ensembles relatifs à la loi de POISSON de moyenne m (calculée avec T) à savoir les ensembles respectivement notés $X_0^T$, $X_1^T$, $X_2^T$, $X_3^T$ qui sont respectivement l'ensemble vide d'impulsions, l'ensemble des impulsions uniques, l'ensemble des impulsions doubles et l'ensemble des impulsions triples (relativement à la loi de POISSON de moyenne m). On a vu en effet qu'on se limitait à k≦3.

Ces ensembles sont des suites de nombres notés respectivement $X_{0,i}^T$, $X_{1,i}^T$, $X_{2,i}^T$, $X_{3,i}^T$, i variant entre 1 et 250 dans l'exemple donné et l'on peut écrire, pour k variant entre 1 et 3 :

$$X_{k,i}^T \ - \ P_m(k).X_i.(k/T)$$

Vis-à-vis de ces ensembles le spectre pur $S_i$ est noté $X^T$. On considère également la décomposition du spectre pur relativement à la loi de POISSON de moyenne m′ (calculée avec T/2), en notant, dans ce cas, le spectre pur $X^{T/2}$. Relativement à m′, l'ensemble vide d'impulsions, l'ensemble des impulsions uniques, l'ensemble des impulsions doubles et l'ensemble des impulsions triples sont respectivement notés $X_0^{T/2}$, $X_1^{T/2}$, $X_2^{T/2}$, $X_3^{T/2}$.

Ces ensembles sont des suites de nombres notés respectivement $X_{0,i}^{T/2}$, $X_{1,i}^{T/2}$, $X_{2,i}^{T/2}$, $X_{3,i}^{T/2}$, i variant entre 1 et 250 dans l'exemple donné et l'on peut écrire :

$$X_{k,i}^{T/2} \ = \ P_{m'}(k).X_i.(k/(T/2))$$

k variant entre 0 et 3.

Compte tenu de la faible largeur des impulsions à l'entrée des amplificateurs, les ensembles $X^T$ et $X^{T/2}$ existent physiquement à l'entrée de ces derniers. On considère également l'ensemble d'impulsions $X'^T$ qui est obtenu par transformation de $X^T$ en tenant compte des phénomènes de coïncidence dans un amplificateur et l'ensemble d'impulsions $X''^T$ obtenu en sortie de l'amplificateur par transformation de $X'^T$. Par analogie avec la décomposition de $X^T$ donnée plus haut, on définit les ensembles $X'^T_1$, $X'^T_2$ et $X'^T_3$ relativement à $X'^T$ et les ensembles $X''^T_1$, $X''^T_2$ et $X''^T_3$ relativement à $X''^T$. Ainsi, $X'^T_2$ est l'ensemble des impulsions qui, dans l'amplificateur, vont avoir une coïncidence par 2, et $X''^T_2$ est l'ensemble des impulsions qui, à la sortie de l'amplificateur, sont formées par le mélange de 2 impulsions dans cet amplificateur.

On explique ci-après comment l'on transforme $X_k^T$ en $X'^T_k$ et $X'^T_k$ en $X''^T_k$.

Comme on l'a vu, on considère que le temps d'occupation de l'amplificateur pour une impulsion double est de l'ordre de 1,5T et, pour une impulsion triple, de l'ordre de 2T.

Le temps disponible dans l'amplificateur pour les impulsions $X_{1,i}^T$, n'est plus $X_{1,i}^T.T$ mais :

$$r \ = \ X_{1,i}^T.T \ - \ 0,5(K.X_{2,i}^T.0,5\ T)$$

avec :

$$K \ = \ P_m(1)/(P_m(0) + P_m(2) + P_m(3)).$$

Il en résulte une perte de comptage pour les ensembles $X_1^T$, $X_0^T$ et $X_2^T$ et un gain de comptage pour l'ensemble $X_3^T$. En effet, lorsqu'une impulsion unique arrive pendant l'occupation de l'amplificateur par une impulsion double, il se produit simultanément une perte d'une impulsion unique (perte d'une impulsion), une perte d'une impulsion double (perte de deux impulsions) et une création d'une impulsion triple (gain de trois impulsions).

On peut ainsi écrire, quel que soit i, 1≦i≦250 :

$$X_{1,i}^T \ = \ X_{1,i}^T.r/(T.X_{1,i}^T)$$

soit :

$$X_{1,i}^T = X_{1,i}^T - 0,25 \text{ K}. X_{2,i}^T$$
$$X_{3,i}^T = X_{3,i}^T + 3(X_{1,i}^T - X_{1,i}^T)$$

Le même phénomène se produit avec l'ensemble $X_2^T$ pour lequel une partie des événements disparaît au profit de l'ensemble $X_3^T$. Il s'agit du même nombre d'événements que celui qui modifie $X_1^T$ et l'on obtient ainsi :

$$X_{2,i}^T = X_{2,i}^T - 2(X_{1,i}^T - X_{1,i}^T)$$

En ce qui concerne la transformation de $X_1^T$ en $X_1^T$, par définition, l'ensemble $X_1^T$ est obtenu en partant de l'ensemble $X_1^T$ et en enlevant les évéments de coïncidence avec l'ensemble $X_2^T$. Les impulsions de l'ensemble $X_1^T$ traversent l'amplificateur sans interférence. Ainsi $X_{1,i}^T$ est identique à $X_{1,i}^T$.

En ce qui concerne la transformation de $X_2^T$ en $X_2^T$, du fait de la nature aléatoire du phénomène d'émission radioactive (et du rendement du photoscintillateur), une impulsion déterminée de l'ensemble $X_2^T$, de hauteur i, n'intervient dans les coïncidences d'ordre 2 que proportionnellement à sa présence dans l'ensemble $X_2^T$. Il en est de même pour les impulsions de hauteurs respectives i, j, k...

Le nombre d'événements "interférence d'une impulsion de hauteur i avec une impulsion de hauteur j" (i<j) est donc :

$$n_{ij} = n_i.n_j/s \text{ si } i<j$$

avec

$$n_i = X_{2,i}^T \text{ et } n_j = X_{3,i}^T$$

s : nombre total d'impulsions dans l'ensemble $X_2^{\prime T}$.

Chaque fois que l'interférence "i.j" a lieu, avec i<j, l'impulsion de hauteur i disparaît et l'amplificateur transmet à sa sortie une impulsion de hauteur au moins égal à j et inférieure à i+j. Lorsque l'événément "interférence i.i" se produit, l'amplificateur ne transmet qu'une seule impulsion de hauteur au moins égale à i et inférieure à i+i. Donc, pour les couples d'impulsions du type jj, kk, ll ..., la fréquence des impulsions est moitié (une impulsion ne sert qu'une fois). On a donc :

$$n_{ij} = n_i.n_j/(2s).$$

En ce qui concerne la répartition entre les impulsions transmises, soit l'impulsion la plus grande, soit une impulsion supérieure à la plus grande, seuls les événements correspondant à une coïncidence dans un intervalle de temps inférieur à T/2 donnent des impulsions supérieures à la plus grande.

On admet que le rapport de répartition est égal à $X_2^{T/2}/X_2^T$. Pour la répartition dans le spectre $X_2^{\prime\prime T}$, on considère qu'il y a équirépartition de chaque nombre $n_{ij}$ calculé dans les classes allant de la classe d'énergie j+1 à la classe d'énergie i+j pour les événements de coïncidence dans un intervalle inférieur à T/2.

Un exemple de tableau de calcul des nombres $n_{ij}$ est donné à la fin de la présente description. Dans cet exemple, on a supposé que le nombre total d'impulsions dans l'ensemble $X_2^{\prime T}$ est égal à 100 et qu'il y a neuf classes d'énergie (et non pas 250) et les classes d'énergie sont bien entendu ordonnées par valeurs croissantes i, j, k ... avec i<j<k<... On voit, par exemple, que la classe de rang 1 contient 20 impulsions et que la classe de rang 9 contient 10 impulsions.

On a rempli le tableau en question en utilisant les formules de calcul de $n_{ij}$ données plus haut.

Pour former l'ensemble $X_2^{\prime\prime T}$, la valeur $n_{ij}$ contenue dans chaque case est multipliée par le rapport R du nombre total d'impulsions de $X_2^{T/2}$ au nombre total d'impulsions de $X_2^{\prime T}$ et le résultat obtenu est équiréparti depuis la classe d'énergie (j+1) jusqu'à la classe d'énergie (i+j). En d'autres termes, on place dans chacune des classes (j+1) à (i+j) la quantité $R.n_{ij}/i$ (i étant pris ici en tant que numéro de classe).

La quantité $n_{ij}(1-R)$ est portée dans la classe d'énergie j.

Ainsi, avec le tableau donné à la fin de la présente description et en supposant par exemple que le nombre total d'impulsions dans $X_2^{T/2}$ soit ici de 30, R est égal à 30/100=0,3. Donc, en prenant par exemple $n_{ij}=n_{(3)(5)}=1$, on calcule

$$n_{ij}.R/i = 0,3/3 = 0,1.$$

Cette valeur est portée dans les classes 6, 7 et 8 et le complément, soit 1-0,3=0,7, est porté dans la classe 5.

Pour le transformation de $X_3^{\prime T}$ en $X_3^{\prime\prime T}$, on procède de la façon suivante : on remarque que $X_3^{\prime\prime T}$ comporte le tiers des impulsions de $X_3^{\prime T}$. On constitue donc, par abstraction, des sous-ensembles de 3 impulsions. Le nombre de ces sous-ensembles est égal au nombre d'impulsions en sortie, c'est-à-dire le tiers des impulsions de $X_3^{\prime T}$. Dans une première étape de calcul, à partir des 2/3 des impulsions de $X_3^{\prime T}$, on détermine les nombres de type $n_{ij}$, (sous-ensembles non complètement remplis comprenant les couples d'impulsions i,j), par la méthode utilisée pour la transformation de $X_2^{\prime T}$ en $X_2^{\prime\prime T}$ :

$$n_{ij.} = (2/3)X'^{T}_{3,i}.(2/3)X'^{T}_{3,j}/s' \text{ si } i<j,$$

et

$$n_{ii.} = (2/3)X'^{T}_{3,i}.(2/3)X'^{T}_{3,i}/(2s')$$

le nombre $s'$ étant les 2/3 du nombre total des impulsions de $X'^{T}_{3}$.

Dans une deuxième étape, chaque case contenant un nombre $n_{ij.}$ sert de base au calcul de répartition du tiers des impulsions de $X'^{T}_{3}$ restant pour obtenir les nombres $n_{ijk}$ :

$$n_{ijk} = n_{ij.}.(1/3)X'^{T}_{3,k}/s''$$

$s''$ étant égal au tiers du nombre total d'impulsions de $X'^{T}_{3}$.

Du fait que chacun des indices i,j,k varie entre 1 et I avec I=250 dans l'exemple choisi plus haut, le nombre d'opérations élémentaires est très important et, compte tenu de la faible valeur du nombre d'impulsions de $X'^{T}_{3}$, on peut choisir, pour la détermination de $X''^{T}_{3}$, une répartition en n classes dont les bornes correspondent à celles des n fenêtres du sélecteur de hauteur d'impulsion (n=8 dans l'exemple choisi plus haut). Le positionnement en énergie dans le spectre des impulsions complexes "i,j,k" de $X''^{T}_{3}$ utilise le même raisonnement que pour les impulsions complexes "i+j" de $X''^{T}_{2}$ à savoir l'utilisation du coefficient R', rapport du nombre total d'im-pulsions de $X_{3}^{T/2}$ au nombre total d'impulsions de $X'^{T}_{3}$, et d'une équirépartition : pour chaque nombre $n_{ijk}$ non nul, on calcule $n_{ijk}.R'/(i+j-1)$ que l'on porte dans les canaux (k+1) à (k+j+i) de $X''^{T}_{3}$ et on calcule $n_{ijk}.(1-R')$ que l'on porte dans le canal k de $X''^{T}_{3}$. Ensuite, on regroupe les 250 nombres de chacun des spectres $X''^{T}_{1}$ et $X''^{T}_{2}$ en n nombres respectivement associés aux n fenêtres d'énergie. On ajoute alors les spectres $X''^{T}_{1}$, $X''^{T}_{2}$ et $X''^{T}_{3}$, fenêtre par fenêtre, pour obtenir une série telle que la série b1 définie plus haut.

On a utilisé, pour développer le raisonnement, plusieurs approximations qui sont :
- temps de luminescence du scintillateur négligeable,
- loi de probabilité approchée par la loi de POISSON,
- notion d'équirépartition des impulsions composées.

En fait, pour optimiser l'ensemble de la chaîne de mesure et en particulier la gamme de mesure et sa précision, on a procédé à une expérimentation très fine qui permet donc, par voie expérimentale, de préciser d'une art les effectifs des différents ensembles $X'^{T}_{1}$, $X'^{T}_{2}$, $X'^{T}_{3}$ et d'autre part les rapports R, R' ainsi que les lois de répartition des impulsions composées. Ces informations sont obtenues, par voie expérimentale, pour différents taux de comptage de la sonde de mesure et mémorisées en vue d'être utilisées comme coefficients correctifs par le programme de calcul de simulation de spectre.

TABLEAU

i        j        k    (i<j<k<...)

| | $X'^T_2$ | 20 | 10 | 10 | 10 | 10 | 10 | 10 | 10 | 10 | 100 |
|---|---|---|---|---|---|---|---|---|---|---|---|
| | 20 | 2 | 2 | 2 | 2 | 2 | 2 | 2 | 2 | 2 | 18 |
| | 10 | | 0,5 | 1 | 1 | 1 | 1 | 1 | 1 | 1 | 7,5 |
| i | 10 | | | 0,5 | 1 | 1 | 1 | 1 | 1 | 1 | 6,5 |
| | 10 | | | | 0,5 | 1 | 1 | 1 | 1 | 1 | 5,5 |
| j | 10 | | | | | 0,5 | 1 | 1 | 1 | 1 | 4,5 |
| | 10 | | | | | | 0,5 | 1 | 1 | 1 | 3,5 |
| k | 10 | | | | | | | 0,5 | 1 | 1 | 2,5 |
| | 10 | | | | | | | | 0,5 | 1 | 1,5 |
| | 10 | | | | | | | | | 0,5 | 0,5 |
| | | 2 | 2,5 | 3,5 | 4,5 | 5,5 | 6,5 | 7,5 | 8,5 | 9,5 | 50 |

I : nombre d'impulsions transmises en sortie de l'amplificateur.

II : nombre d'impulsions perdues dans l'amplificateur.

## Revendications

1. Procédé de spectrométrie gamma, pour déterminer les activités volumiques de n radioéléments émetteurs gamma déterminés, procédé selon lequel on utilise une chaîne de spectrométrie gamma dans laquelle sont engendrées des impulsions dues aux photons gamma émis par les radioéléments et dans laquelle des coïncidences d'impulsions sont susceptibles de se produire, cette chaîne comportant des moyens de photoscintillation (30, 34) et un amplificateur (46) apte à fournir en sortie des impulsions, on effectue, au moyen de la chaîne de spectrométrie, une mesure conduisant à une série de $\underline{n}$ nombres d'impulsions A1$_i$, 1≦i≦n, ces impulsions étant dues aux photons gamma émis par les radioéléments, ces $\underline{n}$ nombres étant respectivement associés à $\underline{n}$ intervalles d'énergie adjacents, eux-mêmes associés respectivement aux $\underline{n}$ radioéléments, procédé caractérisé en ce que les impulsions fournies par l'amplificateur (46) sont en forme de triangle sensiblement isocèle dont la base a une valeur temporelle constante T et dont la surface est proportionnelle à l'énergie laissée par les photons gamma dans les moyens de photoscintillation, et en ce qu'on mémorise au préalable, d'une part, pour chaque radioélément, un spectre d'émission gamma par unité d'activité volumique, qui est appelé spectre normé et qui donne un nombre d'impulsions par canal d'énergie, exprimé en coups par unité de temps, pour des canaux d'énergie adjacents et, d'autre part, la loi de probabilité donnant la probabilité P(k) d'avoir k impulsions pendant le temps T, k prenant des valeurs entières à partir de 0, et en ce qu'on détermine les activités volumiques par les étapes suivantes :

- on effectue la mesure conduisant aux nombres A$_i^1$, 1≦i≦n,
- on effectue une série d'itérations, chaque itération comportant :
- une première phase dans laquelle on détermine, à partir des n nombres A1$_1$, ..., A1$_n$, une série de n nombres B$_i$, 1≦i≦n, formant une approximation des activités volumiques à déterminer et tenant compte des phénomènes de diffusion COMPTON et des pics photoélectriques relatifs aux radioéléments, et
- une deuxième phase dans laquelle
  - . on forme, à partir de chaque spectre normé, un spectre homothétique, en multipliant le nombre d'impulsions de chaque canal par le nombre B$_i$ correspondant au radioélément associé à ce spectre normé,
  - . on ajoute les spectres homothétiques les uns aux autres, canal par canal, pour former un spectre appelé spectre pur, à caractère non aléatoire,
  - . on regroupe les impulsions de ce spectre pur suivant les n intervalles d'énergie pour obtenir une série de n nombres d'impulsions a$_i$, 1≦i≦n, respectivement associés à ces n intervalles d'énergie,
  - . on détermine, à partir du spectre pur, en tenant compte des coïncidences susceptibles de se produire dans la chaîne de spectrométrie et en utilisant à cet effet la loi de probabilité mémorisée, une série de n autres nombres d'impulsions b$_i$, 1≦i≦n, respectivement associés aux n intervalles d'énergie et homologues des nombres a$_i$, et
  - . on calcule les n quantités A1$_i$ -(a$_i$-b$_i$) et l'on utilise ces n quantités dans l'itération suivante pour déterminer les nombres B$_i$ relatifs à cette itération suivante, et
- on arrête la série d'itérations lorsqu'il y a convergence, au moins pour certains radioéléments choisis.

2. Procédé selon la revendication 1, caractérisé en ce que les nombres B$_i$, 1≦i≦n, sont déterminés dans la première phase par une série d'itérations utilisant une méthode de type GAUSS-SEIDEL et en ce que les itérations de la première phase, conduisant à ces nombres B$_i$, sont arrêtées lorsqu'il y a convergence.

3. Procédé selon l'une quelconque des revendications 1 et 2, caractérisé en ce que lesnombres b$_i$ sont déterminés en décomposant le spectre pur en ensembles $X_k^T$ d'impulsions arrivant groupées par k à l'entrée de l'amplificateur pendant un temps inférieur à T, k prenant des valeurs entières à partir de 0, en déterminant, au moyen de la loi de probabilité mémorisée et pour k≧1, l'ensemble $X_k^{\prime T}$ résultant de la transformation, par l'amplificateur, de chaque ensemble $X_k^T$, et en ajoutant les ensembles $X_k^{\prime T}$ ainsi déterminés.

4. Procédé selon la revendication 3, caractérisé en ce que la valeur maximum de k est 3.

5. Procédé selon la revendication 4, caractérisé en ce que les ensembles $X_1^{\prime\prime T}$, $X_2^{\prime\prime T}$ et $X_3^{\prime\prime T}$ sont déterminés de la façon suivante :
- on détermine des ensembles $X_1^{\prime T}$, $X_2^{\prime T}$ et $X_3^{\prime T}$

  dont les composantes sont respectivement notées $X_{1,i}^{\prime T}$, $X_{2,i}^{\prime T}$ et $X_{3,i}^{\prime T}$ pour chaque canal d'énergie i, avec :

$$X_{1,i}^{\prime T} = X_{1,i}^T - 0{,}25K.X_{2,i}^T$$
$$X_{2,i}^{\prime T} = X_{2,i}^T - 2(X_{1,i}^T - X_{1,i}^{\prime T})$$
$$X_{3,i}^{\prime T} = X_{3,i}^T + 3(X_{1,i}^T - X_{1,i}^{\prime T})$$

- on prend $X''^T_{1,i}$ égal à $X'^T_{1,i}$
- on forme l'ensemble $X''^T_2$ en calculant, pour tous canaux d'énergie i,j avec i≦j, les nombres $n_{ij}$ tels que :

$$n_{ij} = (X'^T_{2,i}).(X'^T_{2,j})/s \text{ si } i<j$$
$$n_{ij} = (X'^T_{2,i}).(X'^T_{2,j})/(2s) \text{ si } i = j$$

où s est le nombre total d'impulsions dans l'ensemble $X'^T_2$ puis en portant dans les canaux d'énergie (j+1) à (i+j) de $X''^T_2$ le nombre $R.n_{ij}/i$ et dans le canal j de $X''^T_2$ le nombre $(1-R).n_{ij}$, R étant égal au nombre total d'impulsions de $X^{T/2}_2$ divisé par le nombre total d'impulsions de $X'^T_2$,

- on forme l'ensemble $X''^T_3$ en calculant, pour tous canaux d'énergie i,j avec i≦j, les nombres $n_{ij}$ tels que :

$$n_{ij.} = ((2/3)X'^T_{3,i}).((2/3)X'^T_{3,j})/s' \text{ si } i<j$$
$$n_{ij.} = ((2/3)X'^T_{3,i}).((2/3)X'^T_{3,j})/(2s') \text{ si } i = j$$

où s' est égal aux 2/3 du nombre total d'impulsions dans l'ensemble $X'^T_3$, puis en calculant, pour tous canaux d'énergie i,j,k avec i≦j≦k, les nombres $n_{ijk}$ tels que :

$$n_{ijk} = n_{ij.}.((1/3)X'^T_{3,k})/s''$$

s'' étant égal au tiers du nombre total d'impulsions de l'ensemble $X'^T_3$, puis en portant dans les canaux d'énergie (k+1) à (k+j+i) de $X''^T_3$ le nombre $R'.n_{ijk}/(i+j-1)$ et dans le canal k de $X''^T_3$ le nombre $(1-R').n_{ijk}$, R' étant égal au nombre total d'impulsions de $X^{T/2}_3$ divisé par le nombre total d'impulsions de $X'^T_3$, les ensembles $X^{T/2}_2$ et $X^{T/2}_3$ étant des composantes du spectre pur, respectivement homologues de $X^T_2$ et $X^T_3$ mais définies à partir de la valeur T/2 au lieu de T.

6. Procédé selon la revendication 5, caractérisé en ce qu'au moins l'ensemble $X''^T_3$ est formé en prenant, en tant que canaux d'énergie, les n intervalles d'énergie.

7. Procédé selon la revendication 6, caractérisé en ce que le nombre de canaux d'énergie est supérieur à n et en ce que les nombres de chacun des ensembles $X''^T_1$ et $X''^T_2$ sont regroupés en n nombres respectivement associés aux n intervalles d'énergie avant d'ajouter les ensembles $X''^T_1$, $X''^T_2$ et $X''^T_3$.

8. Chaîne de spectrométrie gamma, pour déterminer les activités volumiques de n radioéléments émetteurs gamma déterminés, cette chaîne comprenant au moins un premier ensemble comportant :
   - un scintillateur (30) directement exposé au rayonnement gamma des radioéléments à mesurer,
   - un photomultiplicateur (34) couplé au scintillateur,
   - un amplificateur (46) prévu pour amplifier les signaux fournis par le photomultiplicateur,
   - un sélecteur de hauteur d'impulsions (48) prévu pour fournir, à partir des impulsions issues de l'amplificateur, des informations sous forme de nombres d'impulsions par fenêtre d'énergie, pour plusieurs fenêtres d'énergie adjacentes, et
   - des moyens électroniques de traitement (56) prévus pour traiter les informations fournies par le sélecteur, cette chaîne étant caractérisée en ce que l'amplificateur (46) est apte à fournir en sortie des impulsions en forme de triangle sensiblement isocèle dont la base a une valeur temporelle constante T et dont la surface est proportionnelle à l'énergie laissée par les photons gamma dans les moyens de photoscintillation, et en ce que les moyens électroniques de traitement (56) sont en outre prévu pour effectuer ladite série d'itérations conformément à l'une quelconque des revendications 1 à 7.

9. Chaîne de spectrométrie selon la revendication 8, caractérisée en ce que le premier ensemble comporte en outre des moyens (32, 36, 44) de stabilisation de la réponse en énergie du rayonnement gamma en fonction de la température du scintillateur (30).

10. Chaîne de spectrométrie selon l'une quelconque des revendications 8 et 9, caractérisée en ce qu'elle comprend en outre un deuxième ensemble qui est identique au premier mais dont le scintillateur (30) n'est pas directement exposé au rayonnement gamma des radioéléments à mesurer, les moyens électroniques de traitement (56) recevant les informations des sélecteurs (48) des deux ensembles et soustrayant, fenêtre par fenêtre, les informations du sélecteur du deuxième ensemble des informations du sélecteur du premier ensemble pour obtenir les nombres $A1_i$, 1≦i≦n, avant d'effectuer ladite simulation.

11. Chaîne de spectrométrie selon l'une quelconque des revendications 8 à 10, caractérisée en ce que cha-

EP 0 414 587 B1

que scintillateur (30) est en NaI(Tl).

**Patentansprüche**

1. Gammaspektrometrieverfahren zur Bestimmung der Aktivitätskonzentrationen von bestimmten n gamma-emittierenden Radioisotopen, Verfahren nach dem eine Gamma-Spektrometrie-Kette verwendet wird, in der Impulse erzeugt werden, die auf die von den Radioisotopen ausgesandten Gammaphotonen zurückzuführen sind, und in der sich Impulskoinzidenzien ereignen können, wobei diese Kette Photoszintillationseinrichtungen (30, 34) und einen Verstärker (46) aufweist, der fähig ist, als Ausgang Impulse zu liefern, nach dem mittels der Spektrometrie-Kette eine Messung durchgeführt wird, die eine Reihe von n Impulszahlen $A1_i$, $1 \leq i \leq n$, ergibt, wobei diese Impulse auf die von den Radioisotopen emittierten Gammaphotonen zurückzuführen sind, wobei diese n Zahlen je n benachbarten Energieintervallen zugeordnet sind, die selbst je den n Radioisotopen zugeordnet sind,

   Verfahren gekennzeichnet dadurch, daß die von dem Verstärker (46) gelieferten Impulse die Form eines nahezu gleichschenkligen Dreiecks aufweisen, dessen Basis einen konstanten Zeitwert T hat und dessen Fläche proportional zu der von den Gammaphotonen in den Photoszintillationseinrichtungen hinterlassenen Energie ist, und daß zuvor gespeichert wird, einerseits für jedes Radioisotop ein Gammaemissionsspektrum je Einheit der Aktivitätskonzentration, welches normiertes Spektrum genannt wird und für benachbarte Energiekanäle eine Zahl von Impulsen je Energiekanal angibt, ausgedrückt in Stößen je Zeiteinheit, und andererseits die Wahrscheinlichkeitsdichte, die die Wahrscheinlichkeit P(k) angibt, daß k Impulse in der Zeit T vorliegen, wobei k ganzzahlige Werte ab 0 annimmt, und daß die Aktivitätskonzentrationen durch folgende Schritte bestimmt werden:
   - Durchführung der Messung, die zu den Zahlen $A1_i$, $1 \leq i \leq n$, führt,
   - Durchführung einer Reihe von Iterationen, wobei jede Iteration folgendes beinhaltet:
     - einen ersten Schritt, in dem man ausgehend von den n Zahlen $A1_i$, ... $A1_n$, eine Reihe von n Zahlen $B_i$, $1 \leq i \leq n$, bestimmt, die eine Annäherung der zu bestimmenden Aktivitätskonzentrationen bildet und die COMPTON-Diffusionsphänomene und die sich auf die Radioisotopen beziehenden photoelektrischen Spitzen berücksichtigt,
     - einen zweiten Schritt, in dem
       . man ausgehend von jedem normierten Spektrum ein homothetisches Spektrum bildet, indem man die Zahl der Impulse eines jeden Kanals mit der Zahl $B_i$ multipliziert, die dem Radioisotop entspricht, das diesem normierten Spektrum zugeordnet ist,
       . man die homothetischen Spektren kanalweise zusammenfügt, um ein sogenanntes reines Spektrum nicht zufälligen Charakters zu bilden,
       . man die Impulse dieses reinen Spektrums nach den n Energieintervallen neu gruppiert, um eine Reihe von n Impulszahlen $a_i$, $1 \leq i \leq n$, zu erhalten, die je diesen n Energieintervallen zugeordnet sind,
       . man ausgehend von dem reinen Spektrum unter Berücksichtigung der Koinzidenzien, die in der Spektrometrie-Kette auftreten können, und unter Verwendung der gespeicherten Wahrscheinlichkeitsdichte zu diesem Zweck eine Reihe von weiteren n Impulszahlen $b_i$, $1 \leq i \leq n$, bestimmt, von denen jede den n Energieintervallen zugeordnet und zu den Zahlen $a_i$ homolog ist, und
       . man die n Mengen $A1_i$-$(a_i$-$b_i)$ berechnet und diese n Mengen in der folgenden Iteration verwendet, um die Zahlen $B_i$ zu bestimmen, die sich auf diese nächste Iteration beziehen, und
   - Beendung der Reihe der Iterationen, sobald Konvergenz wenigstens für bestimmte ausgewählte Radioisotope besteht.

2. Verfahren gemäß Anspruch 1, gekennzeichnet dadurch, daß die Zahlen $B_i$, $1 \leq i \leq n$, im ersten Schritt durch eine Reihe von Iterationen bestimmt werden, die eine Methode vom Typ GAUSS-SEIDL verwenden, und daß die Iterationen des ersten Schrittes, die zu diesen Zahlen $B_i$ führen, beendet werden, sobald Konvergenz besteht.

3. Verfahren gemäß einem der Ansprüche 1 und 2, gekennzeichnet dadurch, daß die Zahlen $b_i$ bestimmt werden, indem das reine Spektrum in Mengen $X_k^T$ Impulse zerlegt wird, die, zusammengefaßt nach k, während einer Zeit kleiner als T am Eingang des Verstärkers ankommen, wobei k ganzzahlige Werte ab 0 annimmt, indem mittels der gespeicherten Wahrscheinlichkeitsdichte und für $k \geq 1$ die Menge $X_k^T$ bestimmt

15

wird, die sich aus der Transformation einer jeden Menge $X_k^T$ durch den Verstärker ergibt, und durch Hinzufügen der derart bestimmten Mengen $X_k^T$.

4.  Verfahren gemäß Anspruch 3, gekennzeichnet dadurch, daß der Höchstwert von k 3 ist.

5.  Verfahren gemäß Anspruch 4, gekennzeichnet dadurch, daß die Mengen $X''_1^T$, $X''_2^T$, und $X''_3^T$ auf folgende Weise bestimmt werden:
    - man bestimmt Mengen $X'_1^T$, $X'_2^T$ und $X'_3^T$, deren Komponenten für jeden Energiekanal i wie folgt lauten:

    $$X'^T_{1,i}, X'^T_{2,i} \text{ und } X'^T_{3,i}$$

    dabei ist

    $$X'^T_{1,i} = X^T_{1,i} - 0,25K.X^T_{2,i}$$
    $$X'^T_{2,i} = X^T_{2,i} - 2(X^T_{1,i} - X'^T_{1,i})$$
    $$X'^T_{3,i} = X^T_{2,i} + 3(X^T_{1,i} - X'^T_{1,i})$$

    - man setzt $X''^T_{1,i}$ gleich $X'^T_{1,i}$,
    - man bildet die Menge $X''_2^T$, indem man für alle Energie-kanäle i,j mit i≦j die Zahlen $n_{ij}$ berechnet, so daß

    $$n_{ij} = (X^T_{2,i}).(X'^T_{2,j}) / s \text{ falls } i<j$$
    $$n_{ij} = (X'^T_{2,i}).(X^T_{2,j}) /(2s) \text{ falls } i = j$$

    dabei ist s die Gesamtzahl der Impulse in der Menge $X'_2^T$ und indem man dann in den Energiekanälen (j+1) bis (i+j) aus $X''_2^T$ die Zahl $R.n_{ij}/i$ und in dem Kanal j aus $X''_2^T$ die Zahl $(1-R).n_{ij}$ einsetzt, wobei R gleich der Gesamtzahl der Impulse aus $X_2^{T/2}$ geteilt durch die Gesamtzahl der Impulse aus $X'_2^T$ ist,
    - man bildet die Menge $X''_3^T$, indem man für alle Energiekanäle i, j mit 1≦i die Zahlen $n_{ij.}$ berechnet, so daß

    $$n_{ij.} = ((2/3)X'^T_{3,i}).((2/3)X'^T_{3,j}) / s' \text{ falls } i<j$$
    $$n_{ij.} = ((2/3)X'^T_{3,i}).((2/3)X'^T_{3,j})/(2s') \text{ falls } i = j$$

    dabei ist s' gleich 2/3 der Gesamtzahl der Impulse in der Menge $X'_3^T$ und indem man für alle Energiekanäle i, j, k mit i≦j≦k die Zahlen $n_{ijk}$ berechnet, so daß

    $$n_{ijk} = n_{ij.}.((1/3)X'^T_{3,k})/s''$$

    dabei ist s'' gleich dem Drittel der Gesamtzahl der Impulse aus der Menge $X'_3^T$ und indem man dann in den Energiekanälen (k+1) bis (k+j+i) aus $X''_3^T$ die Zahl $R'.n_{ijk}/(i+j-1)$ und in den Kanal k aus $X''_3^T$ die Zahl $(1-R').n_{ijk}$ einsetzt, wobei R' gleich der Gesamtzahl der Impulse aus $X_3^{T/2}$ geteilt durch die Gesamtzahl der Impulse aus $X'_3^T$ ist, wobei die Mengen $X_2^{T/2}$ und $X_3^{T/2}$ Komponenten des reinen Spektrums sind, die je homolog zu $X_2^T$ und $X_3^T$ sind, aber ausgehend von dem Wert T/2 statt von T definiert sind.

6.  Verfahren gemäß Anspruch 5, gekennzeichnet dadurch, daß wenigstens die Menge $X''_3^T$ gebildet wird, indem man als Energiekanäle die n Energieintervalle nimmt.

7.  Verfahren gemäß Anspruch 6, gekennzeichnet dadurch, daß die Zahl der Energiekanäle höher als n ist und daß die Zahlen einer jeden der Mengen $X''_1^T$ und $X''_2^T$ in n Zahlen neu gruppiert werden, die je den n Energieintervallen zugeordnet werden, bevor die Mengen $X''_1^T$, $X''_2^T$ und $X''_3^T$ hinzugefügt werden.

8.  Gamma-Spektrometrie-Kette zur Bestimmung der Aktivitätskonzentrationen von bestimmten $\underline{n}$ gamma-emittierenden Radioisotopen, wobei diese Kette wenigstens eine erste Baugruppe aufweist, mit:
    - einem Szintillator (30), der der Gammastrahlung der zu messenden Radioisotopen direkt ausgesetzt ist,
    - einem Photovervielfacher (34), der an den Szintillator gekoppelt ist,
    - einem Verstärker (46), der dazu vorgesehen ist, die von dem Photovervielfacher gelieferten Signale zu verstärken,
    - einem Impulshöhenselektor (48), der dazu vorgesehen ist, ausgehend von den vom Verstärker ausgegebenen Impulsen Informationen in Form von Impulszahlen je Energiefenster für mehrere benachbarte Energiefenster zu liefern, und
    - elektronischen Einrichtungen zur Verarbeitung (56), die dazu vorgesehen sind, die vom Selektor gelieferten Informationen zu verarbeiten, wobei diese Kette gekennzeichnet ist dadurch, daß der Ver-

EP 0 414 587 B1

stärker (46) fähig ist, als Ausgang Impulse zu liefern, die die Form eines nahezu gleichschenkligen Dreiecks aufweisen, dessen Basis einen konstanten Zeitwert T hat und dessen Fläche proportional zu der von den Gammaphotonen in den Photoszintillationseinrichtungen hinterlassenen Energie ist, und daß die elektronischen Einrichtungen zur Verarbeitung (56) darüber hinaus dazu vorgesehen sind, die genannte Reihe von Iterationen gemäß einem der Ansprüche 1 bis 7 durchzuführen.

9.  Spektrometrie-Kette gemäß Anspruch 8, gekennzeichnet dadurch, daß die erste Baugruppe außerdem Einrichtungen (32, 36, 44) zur Stabilisierung des Energiegangs der Gammastrahlung in Abhängigkeit von der Temperatur des Szintillators (30) aufweist.

10.  Spektrometrie-Kette gemäß einem der Ansprüche 8 und 9, gekennzeichnet dadurch, daß sie außerdem eine zweite Baugruppe aufweist, die mit der ersten identisch ist, aber deren Szintillator (30) den Gammastrahlen der zu messenden Radioisotopen nicht direkt ausgesetzt ist, wobei die elektronischen Einrichtungen zur Verarbeitung (56) die Informationen von den Selektoren (48) beider Baugruppen empfangen und die Informationen des Selektors der zweiten Baugruppe von den Informationen des Selektors der ersten Baugruppe fensterweise abziehen, um die Zahlen $A1_i$, $1 \leqq i \leqq n$ zu erhalten, bevor sie die genannte Simulation durchführen.

11.  Spektrometrie-Kette gemäß einem der Ansprüche 8 bis 10, gekennzeichnet dadurch, daß jeder Szintillator (30) aus NaI(Tl) besteht.

## Claims

1.  Gamma spectrometry process according to claim 1, for determining the volume activities of n given gamma ray-emitting nuclides, wherein use is made of a gamma spectrometry chain in which are produced pulses due to the gamma photons emitted by the nuclides and in which pulse coincidences are liable to occur, said chain having photoscintillation means (30, 34) and an amplifier (46) able to supply at the output pulses by means of the spectrometry chain, a measurement is carried out leading to a series of n pulse numbers $A1_i$, $1 \leq i \leq n$, said pulses being due to the gamma photons emitted by the nuclides, said n numbers being respectively associated with n adjacent energy intervals, which are themselves respectively associated with n nuclides, characterized in that the pulses supplied by the amplifier (46) are in the form of a substantially isosceles triangle, whose base has a constant time value t and whose surface is proportional to the energy left by the gamma photons in the photoscintillation means, and in that storage takes place beforehand on the one hand, for each nuclide, of a gamma emission spectrum per volume activity unit, which is called the standardized spectrum and which gives a number of pulses per energy channel, expressed in pulses per time unit, for adjacent energy channels and on the other hand, the probability law giving the probability P(k) of having k pulses during the time T, k assuming integral values starting from 0 and in that the volume activities are determined by the following stages:
the measurement leading to the numbers $A1_i$, $1 \leqq i \leqq n$ is carried out, a series of iterations is carried out, each iteration involving:
a first phase in which determination takes place, starting from n numbers $Al_1$, ..., $Al_n$, a series of n numbers $B_i$, $1 \leqq i \leqq n$, forming an approximation of the volume activities to be determined and taking account of the COMPTON diffusion phenomena and photoelectric peaks relative to the nuclides and
a second phase in which
from each standardized spectrum is formed a homothetic spectrum, by multiplying the number of pulses of each channel by the number $B_i$ corresponding to the nuclide associated with said standardized spectrum,
the homothetic spectra are added to one another channel by channel to form a spectrum called the pure spectrum and which has a non-random nature,
the pulses of said pure spectrum are grouped in accordance with n energy intervals or ranges to obtain a series of n pulse numbers $a_i$, $1 \leq i \leq n$, respectively associated with said n energy intervals, on the basis of the pure spectrum and taking account of the coincidences liable to occur in the spectrometry chain and using for this purpose the stored probability law, determination takes place of a series of n other pulse numbers $b_i$, $1 \leq i \leq n$, respectively associated with the n energy intervals and which are homologs of the numbers a and
the n quantities $Al_i - (a_i - b_i)$ are calculated and these n quantities are used in the following iteration to determine the numbers $B_i$ relative to said following iteration and

17

the series of iterations is stopped when convergence occurs, at least for certain chosen nuclides.

2. Process according to claim 1, characterized in that the numbers $B_i$, $1 \leq i \leq n$, are determined in the first phase by a series of iterations using a method of the GAUSS-SEIDEL type and in that the iterations of the first phase, leading to said numbers $B_i$, are stopped when a convergence occurs.

3. Process according to either of the claims 1 and 2, characterized in that the numbers b are determined by breaking down the pure spectrum into pulse sets $X_k^T$ arriving grouped by k at the amplifier input for a time less than T, k assuming integral values starting from 0, by determining by means of the stored probability law and for $k \geq 1$, the set $X_k'^T$ resulting from the transformation by the amplifier of each set $X_k^T$ and by adding the thus determined sets $X''_k{}^T$.

4. Process according to claim 3, characterized in that the maximum value of k is 3.

5. Process according to claim 4, characterized in that the sets $X''_1{}^T$, $X''_2{}^T$ and $X''_3{}^T$ are determined in the following way:
the sets $X'_1{}^T$, $X'_2{}^T$ and $X'_3{}^T$ are determined and their components are respectively designated $X'_{1,i}{}^T$, $X'_{2,i}{}^T$ and $X'_{3,i}{}^T$ for each energy channel i, with:

$$X'_{1,i}{}^T = X_{1,i}^T - 0.25K.X_{2,i}^T$$
$$X'_{2,i}{}^T = X_{2,i}^T - 2(X_{1,i}^T - X'_{1,i}{}^T)$$
$$X'_{3,i}{}^T = X_{3,i}^T + 3(X_{1,i}^T - X'_{1,i}{}^T)$$
$$X''_{1,i}{}^T \text{ is assumed equal to } X'_{1,i}{}^T,$$

the set $X''_2{}^T$ is formed by calculating, for all the energy channels i,j with $i \leq j$, the numbers $n_{ij}$ such that:

$$n_{ij} = (X'_{2,i}{}^T).(X'_{2,j}{}^T)/s \text{ of } i \leq j$$
$$n_{ij} = (X'_{2,i}{}^T).(X'_{2,j}{}^T)/(2s) \text{ if } i = j$$

in which s is the total number of pulses in the set $X'_2{}^T$ and then by placing in the energy channels (j+1) to (i+j) of $X''_2{}^T$ the number $R.n_{ij}/i$ and in the channel j of $X''_2{}^T$ the number $(1-R).n_{ij}$, R being equal to the total number of pulses of $X_2^{T/2}$ divided by the total number of pulses of $X'_2{}^T$

the set $X''_3{}^T$ is formed by calculating, for all the energy channels i,j with $i \leq j$, the numbers $n_{ij!}$ such that:

$$n_{ij.} = ((2/3)X'_{3,i}{}^T).((2/3)X'_{3,j}{}^T)/s' \text{ if i j}$$
$$n_{ij.} = ((2/3)X'_{3,i}{}^T).((2/3)X'_{3,j}{}^T)/(2s') \text{ if i = j}$$

in which s' is equal to 2/3 of the total number of pulses in the set $X'_3{}^T$, and then calculating, for all the energy channels i,j,k with $i \leq j \leq k$, the numbers $n_{ijk}$ such that:

$$n_{ijk} = n_{ij.} .((1/3)X'_{3,k}{}^T)/s''$$

s" being equal to one third of the total number of pulses of the set $X'_3{}^T$ and then placing in the energy channels (k+1) to (k+j+i) of $X''_3{}^T$ the number $R'.n_{ijk}/(i+j-1)$ and in the channel k of $X''_3{}^T$ the number $(1-R').n_{ijk}$ R' being equal to the total number of pulses of $X_3^{T/2}$ divided by the total number of pulses of $X'_3{}^T$, the sets $X_2^{T/2}$ and $X_3^{T/2}$ being components of the pure spectrum, respectively homolgs of $X_2^T$ and $X_3^T$, but defined on the basis of the value T/2 instead of T.

6. Process according to claim 5, characterized in that at least the set $X''_3{}^T$ is formed by taking, as energy channels, the n energy intervals.

7. Process according to claim 6, characterized in that the number of energy channels exceeds n and in that the numbers of each of the sets $X''_1{}^T$ and $X''_2{}^T$ are grouped into n numbers respectively associated with the n energy intervals before adding the sets $X''_1{}^T$, $X''_2{}^T$ and $X''_3{}^T$.

8. Gamma spectrometry chain for determining the volume activities of n given gamma ray emitting nuclides, said chain comprising at least one first assembly comprising a scintillator (30) directly exposed to the gamma radiation of the nuclides to be measure,d a photomultiplier (34) coupled to the scintillator, an amplifier (46) for amplifying the signals supplied by the photomultiplier, a pulse height selector (48) for supplying, on the basis of pulses from the amplifier, information in the form of pulse numbers per energy window for several adjacent energy windows and electronic processing means (56) for processing the information supplied by the selector, said chain being characterized in that the amplifier (46) is able to supply at the output pulses shaped as a substantially isosceles triangle, whose base has a constant time value T and whose surface is proportional to the energy left by the gamma photons in the photoscintillation means and in that the electronic processing means (56) are also provided for performing said series of iterations according to any one of the claims 1 to 7.

9. Spectranetry chain according to claim 8, characterized in that the first assembly also incorporates means (32, 36, 44) for stabilizing the energy response of the gamma radiation as a function of the temperature of the scintillator (30).

10. Spectrometry chain according to either of the claims 8 and 9, characterized in that it also comprises a second assembly, which is identical to the first, but whose scintillator (30) is not directly exposed to the gamma radiation of the nuclides to be measured, the electronic processing means (56) receiving information from the selectors (48) of the two assemblies and subtracting window by window the information from the selector of the second assembly from the information from the selector of the first assembly in order to obtain the numbers $A1_i$, $1 \leq i \leq n$, before carrying out said simulation.

11. Spectrometry chain according to any one of the claims 8 to 10, characterized in that each scintillator (30) is of NaI(T1).

FIG. 1

FIG. 2

FIG. 3

EP 0 414 587 B1